# EUROPEAN PATENT SPECIFICATION

(11) **EP 4 317 110 B1**
(45) Date of publication and mention of the grant of the patent: **04.06.2025**
(21) Application number: 22780766.6
(22) Date of filing: 28.03.2022
(51) Int. Cl.: C04B 35/64, C04B 35/583, C04B 38/00, F27D 3/12

(54) **SETTER FOR CERAMIC FIRING**
BRENNHILFSMITTEL FÜR KERAMIK
MOYEN DE RÉGLAGE POUR CUISSON DE CÉRAMIQUE

(30) Priority: 31.03.2021 JP 2021060508
(43) Date of publication of application: 07.02.2024
(73) Proprietor: Denka Company Limited, Tokyo 103-8338 (JP)
(72) Inventor: NONAKA, Shuhei, Tokyo 103-8338 (JP)
(74) Representative: Hoffmann Eitle
(86) International application number: PCT/JP2022/015048
(87) International publication number: WO 2022/210555

(56) References cited:
- JP-A- 2000 119 068
- JP-A- 2000 128 646
- JP-A- 2000 128 647
- JP-A- H09 278 526

## Description

### Technical Field

The present disclosure relates to a setter for ceramic firing.

### Background Art

Hexagonal boron nitride has lubricity, heat resistance, high thermal conductivity, mold release properties, reaction resistance, insulation properties, and the like and is in use not only for uses of solid lubricants, thermally conductive fillers, insulating fillers and the like but also for a use of setters for firing ceramic raw materials.

A setter is a plate material that is used as a mounting table or a weight material at the time of firing green sheets containing a ceramic raw material and a binder resin to manufacture ceramic plates. Ordinarily, a setter is a porous sintered body and enables at least part of gases that are generated at the time of degreasing green sheets to escape to the outside through pores in the porous body.

The properties of ceramic plates that are manufactured using a setter can be affected by the setter. For example, when a setter is curved or the like, it is likely that the shape may be transferred to a green sheet and a deformed ceramic plate may be produced, and, in the case of a ceramic plate derived from a green sheet that comes into direct contact with a setter, a defect such as cracks may be generated at the time of peeling since adhesion to the setter may occur. Therefore, studies are underway to reduce the above-described problem for setters that are formed using a hexagonal boron nitride powder.

For example, Patent Literature 1 describes a setter for ceramic firing that is composed of a boron nitride sintered body having an average pore diameter of 0.1 to 0.4 µm and has a bending strength of 15 MPa or higher.

### Citation List

### Patent Literature

[Patent Literature 1]
Japanese Unexamined Patent Publication No. H09-278526

### Summary of Invention

### Technical Problem

According to the present inventors' studies, even in the case of using a setter that is formed using a hexagonal boron nitride powder, the quality of ceramic plates to be obtained may vary. For example, there may be cases where sintering does not sufficiently progress and the strength of a ceramic plate is not exhibited or there are cases where color unevenness or the like is observed on the surface of a ceramic plate.

An objective of the present disclosure is to provide a setter for ceramic firing that does not impair the escape of gases during degreasing at the time of being used as a setter for ceramic firing and has excellent airtightness for maintaining the environment of ceramic during firing.

### Solution to Problem

According to the present inventors' studies about the above-described problem, regarding the removal of an organic binder from a green sheet, the escape of a sintering aid to the outside of a system in the middle of firing and the like, it was found that, on the surface of a degreased body having a reduced content of the organic binder, the concentrations of an impurity, such as the organic binder, and the sintering aid are varied, which affects the properties of a ceramic plate to be obtained by firing, and such variations also affect a setter that is used during the firing. More specifically, even when the organic binder has been decomposed in the green sheet by heating, it is difficult for the organic binder to escape to the outside of the sheet compared with a case where the organic binder is decomposed in the peripheral part, and, in the sheet near the setter, the escape of the decomposed gas of the organic binder can be suppressed due to the setter. Incidentally, for setters that are formed using a hexagonal boron nitride powder, it was found that an effect of suppressing the escape of a sintering aid by thermal expansion at high temperatures can be expected, but there are cases where, depending on the relationship between the pore diameters and the thermal expansion coefficient, the pore diameters are not sufficiently contracted (or blocked in some cases), the sintering aid escapes to the outside of a sheet before getting involved in the sintering of a ceramic raw material, the sintering of the ceramic raw material becomes insufficient and as high a strength as can be expected cannot be exhibited. The present disclosure has been made based on such findings.

An aspect of the present disclosure provides a setter for ceramic firing, in which the setter is composed of a boron nitride sintered plate having a plurality of pores, a porosity is 8 vol% or higher, and a proportion of pores having a pore diameter of 0.2 to 0.9 µm is 76% to 95% of all pores, the pore diameter being measured with a mercury porosimeter.

When the setter for ceramic firing has a porosity of a predetermined value or higher and the proportion of pores having a predetermined pore diameter in the pores is within the above-described range, it is possible to maintain pores having relatively large pore diameters in temperature ranges where a green sheet is degreased, and it is possible to facilitate the removal of the decomposed gas of an organic matter that is contained in the green sheet at the time of being used as a setter. In addition, in the setter for ceramic firing, it is possible to decrease the pore diameters by contraction at high temperatures, which is a feature of boron nitride sintered plates, during firing at high temperatures, such an action makes it possible to enhance the airtightness of the degreased body (degreased green sheet) held in the setter and to suppress the escape of a sintering aid to the outside from the degreased body, and it becomes possible to fire the green sheet in a more uniform status. Due to such an action, the use of the setter for ceramic firing makes sintering sufficiently progress and makes it possible to manufacture high-quality ceramic plates in which the generation of color unevenness or the like has been suppressed.

In the setter for ceramic firing, a thermal expansion coefficient at 600°C may be -1.0 ppm/K or more. Green sheets are degreased at relatively low temperatures of 600°C or lower. Therefore, when the percentage of contraction is suppressed to be low so that the thermal expansion coefficient at 600°C is in the above-described range, it is possible to make the escape of the decomposed gas of an organic matter easier.

In the setter for ceramic firing, a proportion of open pores in the pores may be 40% or more.

In the setter for ceramic firing, a content of iron may be 30.0 ppm or less. When the content of iron is in the above-described range, it is possible to further suppress adhesion to a ceramic raw material that is contained in a green sheet or the like, and higher-quality ceramic plates can be manufactured. In addition, it is possible to further suppress color unevenness or the like in ceramic plates to be obtained.

In the setter for ceramic firing, a content of calcium may be 100.0 ppm or less. When the content of calcium is in the above-described range, it is possible to further suppress adhesion to a ceramic raw material that is contained in a green sheet or the like, and higher-quality ceramic plates can be manufactured. In addition, it is possible to further suppress color unevenness or the like in ceramic plates to be obtained.

In the setter for ceramic firing, a peak position in a distribution curve of the pore diameters may be 0.25 µm or more. When the peak position in the distribution curve of the pore diameters is in the above-described range, it is possible to further improve the permeability to gas during degreasing, and ceramic plates where color unevenness has been further reduced can be manufactured.

In the setter for ceramic firing, a peak position in a distribution curve of the pore diameters may be 0.80 µm or less. When the peak position in the distribution curve of the pore diameters is in the above-described range, it is possible to improve the bending strength of the setter and to further suppress the deformation of the setter itself during firing, and ceramic plates having superior quality can be manufactured.

### Advantageous Effects of Invention

According to the present disclosure, it is possible to provide a setter for ceramic firing that does not impair the escape of gases during degreasing at the time of being used as a setter of ceramic firing and has excellent airtightness for maintaining the environment of ceramic during firing.

### Brief Description of Drawing

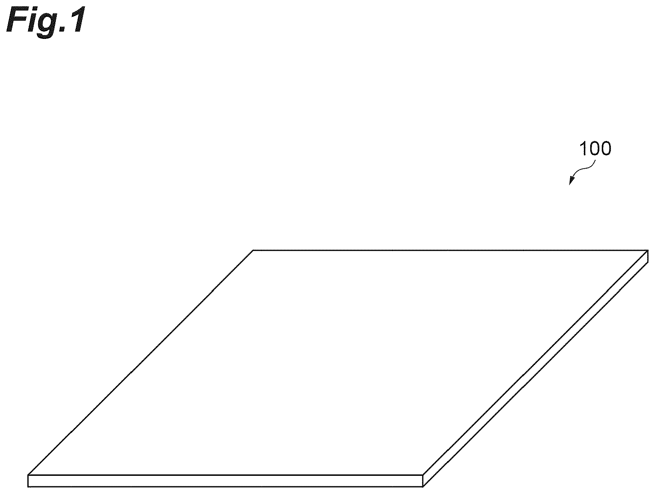

FIG. 1 is a perspective view showing an example of a setter for ceramic firing.

### Description of Embodiment

Hereinafter, an embodiment of the present disclosure will be described with reference to a drawing depending on the situation. Here, the following embodiment is an example for describing the present disclosure and is not intended to limit the present disclosure to the following contents. In addition, unless particularly otherwise specified, positional relationships such as above, below, right, and left will be based on the positional relationships shown in the drawing. Furthermore, the dimensional ratios of each element are not limited to the ratios shown in the drawing.

Unless particularly otherwise described, materials that are exemplified in the present specification can be used singly or two or more thereof can be used in combination. In a case where there is a plurality of substances corresponding to each component in a composition, unless particularly otherwise described, the content of each component in the composition means the total amount of the plurality of substances present in the composition.

FIG. 1 is a perspective view showing an example of a setter for ceramic firing. A setter for ceramic firing 100 is composed of a boron nitride sintered plate having a plurality of pores. In the setter for ceramic firing 100, the porosity is 8 vol% or higher, and the proportion of pores having a pore diameter, which is measured with a mercury porosimeter, of 0.2 to 0.9 µm is 76% to 95% of all pores. The size of the setter for ceramic firing is not particularly limited, but is preferably a large area that is 200 mm or more in length and 200 mm or more in width such that firing of a plurality of green sheets at the same time becomes possible when the productivity is taken into account.

The porosity of the setter for ceramic firing 100 may be, for example, higher than 8 vol%, 9 vol% or higher, 10 vol% or higher, 15 vol% or higher or 20 vol% or higher. The upper limit value of the porosity of the setter for ceramic firing 100 may be, for example, 45 vol% or lower, lower than 45 vol%, 43 vol% or lower, 40 vol% or lower or 35 vol% or lower from the viewpoint of suppressing a decrease in the mechanical strength of the setter itself and sufficiently suppressing the deformation of the setter when exposed to high temperatures. The porosity of the setter for ceramic firing 100 may be adjusted in the above-described range and may be, for example, higher than 8 vol% and 43 vol% or lower or 9 to 43 vol%.

The porosity in the present specification is a value that is measured based on a mercury intrusion method according to JIS R 1655: 2003 "Test methods for pore size distribution of fine ceramic green body by mercury porosimetry."

The proportion of pores having a pore diameter of 0.2 to 0.9 µm, which is measured with a mercury porosimeter, in all pores may be, for example, 77% or more, 78% or more, 79% or more, 80% or more, 85% or more or 90% or more. The proportion of pores having a pore diameter of 0.2 to 0.9 µm, which is measured with a mercury porosimeter, in all pores is 95% or less, but may be, for example, 94% or less or 93% or less. The proportion of pores having a pore diameter of 0.2 to 0.9 µm, which is measured with a mercury porosimeter, in all pores may be adjusted in the above-described range and may be, for example, 77% to 95% or 80% to 95%.

The proportion of pores having the predetermined pore diameter can be calculated from a pore size distribution curve that is measured with a mercury porosimeter.

The proportion of open pores (pores that are not closed to the external space) in the pores in the setter for ceramic firing 100 is high, whereby the escape of gas, for example, during the degreasing of a green sheet is easy, and it is possible to more significantly obtain an effect of airtightness improvement by the contraction of the pores in association with the expansion of boron nitride at high temperatures. The proportion of the open pores in the pores may be, for example, 40% or more, 50% or more or 60% or more. The proportion of the open pores in the pores may be 100%, but may be 95% or less or 90% or less from the viewpoint of improving the bending strength.

The proportions of the open pores and closed pores (a difference between all pores and the open pores) in the pores of the setter for ceramic firing 100 can be determined by the following method where Archimedes' method is used. The porosity in the present disclosure can be calculated based on a theoretical density that is calculated from the total porosity that is obtained by Archimedes' method and a bulk density obtained from the dimensions and mass of the boron nitride sintered body. The above-described open porosity is measured according to JIS R 1634: 1998 "Test methods for density and apparent porosity of fine ceramics." The closed porosity is calculated from the difference between the total porosity and the open porosity calculated by the above-described methods.

Regarding the pores in the setter for ceramic firing 100, the peak position in the distribution curve of the pore diameters may be, for example, 0.25 µm or more, 0.28 µm or more, 0.30 µm or more or 0.33 µm or more. When the peak position of the pore diameters is in the above-described range, it is possible to improve the permeability to gas during the degreasing of a green sheet, and thus ceramic plates where color unevenness has been further reduced can be manufactured.

Regarding the pores in the setter for ceramic firing 100, the peak position in the distribution curve of the pore diameters may be, for example, 0.80 µm or less, 0.70 µm or less, 0.65 µm or less, 0.62 µm or less, 0.60 µm or less or 0.57 µm or less. When the peak position of the pore diameters is in the above-described range, it is possible to improve the bending strength of the setter and to further suppress the deformation of the setter itself during firing, and ceramic plates having superior quality can be manufactured. The peak position in the distribution curve of the pore diameters may be adjusted in the above-described range and may be, for example, 0.25 to 0.80 µm.

The setter for ceramic firing 100 may contain a metal element that is derived from a raw material. Examples of the metal element include iron, calcium, sodium, magnesium, silicon, chromium, nickel, aluminum and the like. In a case where such a metal element is present on the main surface of the setter for ceramic firing 100, since there are cases where a green sheet or a ceramic plate that comes into contact with the setter adheres to the setter, the content of the metal element is preferably suppressed to be low.

The content of iron in the setter for ceramic firing 100 may be, for example, 30.0 ppm or less, 20.0 ppm or less, 10.0 ppm or less, 5.0 ppm or less or 1.0 ppm or less.

The content of calcium in the setter for ceramic firing 100 may be, for example, 100.0 ppm or less, 80.0 ppm or less, 60.0 ppm or less, 40.0 ppm or less, 20.0 ppm or less or 10.0 ppm or less.

The contents of the metal elements such as iron and calcium mean values that are measured by a pressurized acid decomposition method and high frequency inductively coupled plasma atomic emission spectrometry (ICP atomic emission spectrometry).

Thermal contraction of the setter for ceramic firing 100 at 600°C is suppressed to be relatively small. Therefore, in a case where the setter is used as a setter in a degreasing step of a green sheet or the like, the escape of the decomposed gas of an organic binder to the outside through the setter becomes easy, the content of the organic binder is reduced, and ceramics can be fired in a state where the amount of a remaining impurity has been further reduced.

The thermal expansion coefficient at 600°C of the setter for ceramic firing 100 may be, for example, -1.00 ppm/K or more, -0.95 ppm/K or more, -0.90 ppm/K or more, -0.80 ppm/K or more, -0.70 ppm/K or more or -0.60 ppm/K or more. The upper limit value of the thermal expansion coefficient at 600°C of the setter for ceramic firing 100 is ordinarily less than -0.30 ppm/K since the setter is composed of boron nitride. The thermal expansion coefficient at 600°C of the setter for ceramic firing 100 may be adjusted in the above-described range and may be, for example, -1.00 to -0.30 ppm/K.

The thermal expansion coefficient in the present specification indicates the coefficient of linear expansion and means a value that is measured according to the method described in JIS R 1618: 2002 "Measuring method of thermal expansion of fine ceramics by thermomechanical analysis."

The setter for ceramic firing 100 has an excellent bending strength. Therefore, even when the setter expands due to an increase in temperature, deformation such as bending is suppressed. The bending strength of the setter for ceramic firing 100 may be, for example, 15 MPa or higher, 20 MPa or higher, 25 MPa or higher or 30 MP or higher. The upper limit value of the bending strength of the setter for ceramic firing 100 may be, for example, 100 MPa or lower, 80 MPa or lower, 70 MPa or lower or 60 MPa or lower.

The bending strength in the present specification means a three-point bending strength that is measured according to JIS R 1601: 2008 "Testing method for flexural strength (modulus of rupture) of fine ceramics at room temperature." The three-point bending strength can be measured using a bending strength meter.

The setter for ceramic firing can be manufactured by, for example, the following method. An example of a method for manufacturing the setter for ceramic firing has a first firing step of obtaining a heated product by performing a heating treatment on a mixture containing a boron nitride powder at a heating temperature of 1800°C or lower for a predetermined time and a second firing step of obtaining a fired body from the heated product by performing a heating treatment at a heating temperature of 1900°C to 2300°C for a predetermined time.

As the boron nitride powder, it is possible to use a powder mixture of an amorphous boron nitride powder and a hexagonal boron nitride powder. From the viewpoint of improving the thermal conductivity of the setter for ceramic firing, the amount of the hexagonal boron nitride powder blended in the powder mixture is desirably large. The amount of the hexagonal boron nitride powder blended may be, for example, 15 to 85 parts by mass or 20 to 80 parts by mass when the total amount of the boron nitride powder is set to 100 parts by mass.

From the viewpoint of adjusting the pore diameters in the setter for ceramic firing, as the boron nitride powder, two or more boron nitride powders having different grain diameters are preferably used in combination. For example, boron nitride having a small average particle diameter (small-particle diameter boron nitride) and boron nitride having a large average particle diameter (large-particle diameter boron nitride) are used in combination. From the viewpoint of improving the thermal conductivity and transferring a surrounding temperature change to a green sheet and a degreased body through the setter for ceramic firing, it is desirable to use a hexagonal boron nitride powder as the large-particle diameter boron nitride and to use an amorphous boron nitride powder as the small-particle diameter boron nitride.

The average particle diameter of the hexagonal boron nitride powder may be, for example, 10 µm or more, 20 µm or more or 30 µm or more. The upper limit value of the average particle diameter of the hexagonal boron nitride powder may be, for example, 100 µm or less, 80 µm or less, 70 µm or less, 60 µm or less or 50 µm or less.

A particle size distribution in the present disclosure is measured according to the method described in JIS Z 8825: 2013 "Particle size analysis-Laser diffraction methods." In the cumulative distribution of the number-based particle size distribution that is measured as described above, the particle diameter when the cumulative value from the small particle diameter reaches 50% of all is the average particle diameter (D50). In the measurement of the particle size distribution, it is possible to use, for example, Microtrac (manufactured by Nikkiso Co., Ltd., trade name: MT3300EXII).

From the viewpoint of suppressing the reduction of reaction sites with a sintering aid to promote liquid-phase sintering, the lower limit value of the total oxygen amount in the boron nitride powder may be, for example, 0.3 mass% or more, 0.5 mass% or more or 1.0 mass% or more. The upper limit value of the total oxygen amount in the boron nitride powder may be, for example, 3.0 mass% or less, 2.5 mass% or less, 2.0 mass% or less, 1.5 mass% or less, 1.2 mass% or less, 1.0 mass% or less or 0.8 mass% or less.

The total oxygen amount in the present specification can be measured using an oxygen/nitrogen simultaneous analyzer. As the oxygen/nitrogen simultaneous analyzer, it is possible to use, for example, an oxygen/nitrogen analyzer (trade name: EMGA-920) manufactured by Horiba, Ltd.

The mixture may further contain a sintering aid as necessary. The sintering aid may be, for example, an oxide of a rare earth element such as yttrium oxide, an oxide such as aluminum oxide, magnesium oxide or calcium oxide, an alkali metal carbonate such as lithium carbonate or sodium carbonate, boron oxide or the like.

The amount of the sintering aid blended may be, for example, 0.01 parts by mass or more or 0.10 parts by mass or more with respect to a total of 100 parts by mass of the boron nitride powder and the sintering aid. The amount of the sintering aid added may be, for example, 5.00 parts by mass or less, 3.00 parts by mass or less or 1.00 part by mass or less with respect to a total of 100 parts by mass of the boron nitride powder and the sintering aid.

The mixture may further contain an organic binder or the like as necessary. In a case where the mixture contains an organic binder, the manufacturing method has a degreasing step for decomposing and removing the organic binder prior to the continuing first firing step and second firing step. In the degreasing step, the organic binder component may be decomposed and removed from the mixture by, for example, performing a heating treatment at a heating temperature of 600°C or lower for one to five hours. Hereinafter, the mixture that has been subjected to the degreasing step will be referred to as the degreased body.

The mixture may be prepared by dry grinding or dry mixing. However, in this case, the structure of a ceramic sintered body to be obtained is likely to become uneven due to the agglomeration of the raw material powder. Therefore, it is preferable to perform wet grinding and wet mixing using a ball mill or the like. In addition, a device having a high dispersive force such as a bead mill may be used. A liquid medium that is used in the wet grinding and the wet mixing may be an organic solvent and may be, for example, alcohols. In order to further improve the formability, an organic binder may be blended in a proportion of 3 mass% or less with respect to the solid content and granulation may be performed with a spray dryer.

The obtained mixture may be pressure-formed into a predetermined shape in advance. From the viewpoint of obtaining a ceramic sintered body having reduced anisotropy, the forming may be performed using, for example, a cold isostatic pressing device (CIP). In a case where the mixture has a high bulk density and poor formability, mold forming may be performed prior to CIP. The formed shape is not particularly limited and may be, for example, a prismatic shape or a cylindrical shape.

It is possible to adjust the porosity of a setter for ceramic firing to be obtained with the pressure during the forming. The pressure during the forming may be, for example, 5 to 500 MPa, 20 to 500 MPa, 80 to 500 MPa, 80 to 120 MPa, 120 to 300 MPa or 300 to 500 MPa.

The firing may be performed using, for example, a heating and pressure forming device such as a hot press, and it is possible to use a batch-type furnace, a continuous furnace and the like. Examples of the batch-type furnace include a muffle furnace, a tubular furnace, an atmosphere furnace and the like. Examples of the continuous furnace include a tunnel furnace, a belt furnace, a pusher furnace, a koto-shaped continuous furnace and the like.

The firing can be performed in an atmosphere containing at least one selected from the group consisting of a rare gas and an insert gas. As the rare gas, for example, argon, helium and the like may be contained, argon may be contained, and the atmosphere may be composed of argon. The inert gas may be, for example, nitrogen or the like.

The firing can be performed at normal pressure or under a pressurized condition. The pressure during the firing may be, for example, 0.1 MPa or higher, 1.0 MPa, 5.0 MPa, 10.0 MPa or higher, 15.0 MPa or higher or 20.0 MPa or higher.

The first firing step is a step of obtaining a heated product from the mixture or the degreased body by heating at a medium temperature of 1800°C or lower for a predetermined time

The heating temperature in the first firing step may be, for example, 1200°C or higher or 1300°C or higher. The heating temperature in the first firing step may be, for example, 1750°C or lower.

The firing time in the first firing step may be, for example, one to 10 hours, two to 10 hours or two to eight hours.

The firing time in the present specification means a time during which the temperature of the atmosphere where a firing subject such as the mixture is placed reaches the firing temperature and then held at that temperature (holding time).

The second firing step is a step of obtaining a sintered body from the heated product by performing a heating treatment at a high temperature of 1900°C to 2300°C for a predetermined time.

The heating temperature in the second firing step may be, for example, 1950°C or higher or 2000°C or higher. The heating temperature in the second firing step may be, for example, 2200°C or lower or 2100°C or lower.

The firing time in the second firing step may be, for example, one to 15 hours, three to 15 hours or three to 10 hours.

Hitherto, several embodiments have been described, but the present disclosure is not limited to the above-described embodiments by any means. In addition, the contents described regarding the above-described embodiments can be applied to each other.

### [Examples]

Hereinafter, the present disclosure will be described in more detail using examples and comparative examples. The present disclosure is not limited to the following examples.

### (Example 1)

An amorphous boron nitride powder (manufactured by Denka Company Limited, total oxygen amount: 1.5 mass%, boron nitride purity: 97.0%) and a hexagonal boron nitride powder (manufactured by Denka Company Limited, total oxygen amount: 0.3 mass%, boron nitride purity: 99.0%, average particle diameter: 15 µm) were measured in a container so as to become 79 mass% and 20 mass%, respectively, a sintering aid (boron oxide) was added thereto so as to become 1 mass%, then, cracking and mixing were performed with a ball mill, and a powder mixture of a nitride was prepared. The total oxygen amount of the boron nitride powder (a powder mixture of the amorphous boron nitride powder and the hexagonal boron nitride powder) is 1.2 mass%.

A hot press device was filled with the powder mixture, the powder mixture was pressurized at 5 MPa to be preliminarily formed, then, heated and sintered under the application of a pressure of 20 MPa, thereby adjusting a setter for ceramic firing of Example 1. In the heating treatment of the hot pressing, first, the powder mixture was held at 1450°C for three hours (first firing) and then held at 2000°C for five hours (second firing), thereby sintering the powder mixture.

A plate having a thickness of 5 mm was cut out from the obtained nitride sintered body, and this was regarded as the setter for ceramic firing of Example 1.

### (Example 2)

An amorphous boron nitride powder (manufactured by Denka Company Limited, total oxygen amount: 1.5 mass%, boron nitride purity: 97.0%) and a hexagonal boron nitride powder (manufactured by Denka Company Limited, total oxygen amount: 0.3 mass%, boron nitride purity: 99.0%, average particle diameter: 15 µm) were measured in a container so as to become 40 mass% and 60 mass%, respectively, an organic binder and water were added thereto and mixed therewith, then, dried and granulated, thereby obtaining a powder mixture of a nitride. A cold isostatic pressing (CIP) device (manufactured by Kobe Steel, Ltd., trade name: ADW800) was filled with the obtained powder mixture, and the powder mixture was compressed by applying a pressure of 500 MPa, thereby obtaining a compact. In order to decompose and remove the organic binder, the obtained compact was heated at a heating temperature of 600°C for five hours, and the organic binder component was decomposed and removed from the mixture, thereby obtaining a degreased body. After that, the degreased body was held at 1400°C for two hours using a batch-type high-frequency furnace (manufactured by Fuji Dempa Kogyo Co., Ltd.,) (first firing) and then held at 2050°C for 10 hours (second firing) to be sintered, thereby preparing a nitride sintered body. The firing was performed under a pressure of 0.1 MPa (normal pressure) in the furnace adjusted to a nitrogen atmosphere while nitrogen was made to flow in the furnace such that the flow rate reached 10 L/minute in a standard state. The total oxygen amount of the boron nitride powder (a powder mixture of the amorphous boron nitride powder and the hexagonal boron nitride powder) is 0.8 mass%.

A plate having a thickness of 5 mm was cut out from the obtained nitride sintered body, and this was regarded as the setter for ceramic firing of Example 2.

### (Example 3)

A setter for ceramic firing was prepared in the same manner as in Example 2 except that the cold isostatic pressing (CIP) pressure in the forming step was changed to 100 MPa.

### (Example 4)

A setter for ceramic firing was prepared in the same manner as in Example 2 except that the amorphous boron nitride powder used for the preparation of the powder mixture was changed to an amorphous boron nitride powder (manufactured by Denka Company Limited, total oxygen amount: 2.0 mass%, boron nitride purity: 96.2%). The total oxygen amount of the boron nitride powder (a powder mixture of the amorphous boron nitride powder and the hexagonal boron nitride powder) is 1.0 mass%.

### (Example 5)

A setter for ceramic firing was prepared in the same manner as in Example 2 except that the heating temperature in the second firing was changed to 2000°C.

### (Example 6)

A setter for ceramic firing was prepared in the same manner as in Example 2 except that the heating temperature in the first firing was changed to 1800°C and the heating temperature in the second firing was changed to 2000°C.

### (Comparative Example 1)

A setter for ceramic firing was prepared in the same manner as in Example 1 except that only the amorphous boron nitride powder (manufactured by Denka Company Limited, total oxygen amount: 1.8 mass%, boron nitride purity: 96.6%) was used (a hexagonal boron nitride powder was not used), boron oxide and calcium oxide were added thereto as sintering aids so as to be 1 mass% and 0.5 mass%, respectively, the cracked and mixed powder was used as a powder mixture, in the first firing, the heating temperature was changed to 1400°C, and the holding time was changed to two hours, and, in the second firing, the heating temperature was changed to 1650°C, and the holding time was changed to five hours.

### (Comparative Example 2)

A setter for ceramic firing was prepared in the same manner as in Example 1 except that an amorphous boron nitride powder (manufactured by Denka Company Limited, total oxygen amount: 2.8 mass%, boron nitride purity: 95.0%) and a hexagonal boron nitride powder (manufactured by Denka Company Limited, total oxygen amount: 0.3 mass%, boron nitride purity: 99.0%, average particle diameter: 15 µm) were mixed so as to become 70 mass% and 30 mass%, respectively, boron oxide and calcium oxide were added thereto as sintering aids so as to be 1 mass% and 0.5 mass%, respectively, the cracked and mixed powder was used as a powder mixture, in the first firing, the heating temperature was changed to 1400°C, and the holding time was changed to two hours, and, in the second firing, the heating temperature was changed to 1550°C, and the holding time was changed to five hours. The total oxygen amount of the boron nitride powder (a powder mixture of the amorphous boron nitride powder and the hexagonal boron nitride powder) is 2.1 mass%.

### (Comparative Example 3)

A setter for ceramic firing was prepared in the same manner as in Example 2 except that the pressure during the CIP forming was changed to 30 MPa, the first firing was not performed, and the heating temperature in the second firing was changed to 2000°C.

### (Comparative Example 4)

A setter for ceramic firing was prepared in the same manner as in Example 2 except that the pressure during the CIP forming was changed to 50 MPa, the first firing was not performed, and the heating temperature in the second firing was changed to 2000°C.

### <Physical property measurement of setter for ceramic firing>

For the setters for ceramic firing prepared in Examples 1 to 6 and Comparative Examples 1 to 4, the porosities, the proportions of pores having a pore diameter of 0.2 to 0.9 µm, which was measured with a mercury porosimeter, the contents of iron, the contents of calcium and the thermal expansion coefficients at 600°C were measured. The results are shown in Table 1.

### <Evaluation of setter for ceramic firing>

Ceramic firing was performed using each of the setters for ceramic firing prepared in Examples 1 to 6 and Comparative Examples 1 to 4, and performance as a setter was evaluated from the viewpoint of the strength and color unevenness of a ceramic plate to be obtained. In the evaluation, the setter for ceramic firing was processed to be 100 mm in length, 100 mm in width and 5 mm in thickness and used.

Specifically, 94 parts by mass of a silicon nitride powder, 3 parts by mass of magnesium oxide as a sintering aid and 3 parts by mass of yttrium oxide were measured in a container and mixed together, thereby obtaining a mixture. 25 Parts by mass of an organic binder was added to the mixture, 150 parts by mass of ethyl alcohol was added thereto, and then the components were mixed using silicon nitride balls, thereby obtaining a slurry. After the viscosity was adjusted, the obtained slurry was formed by a doctor blade method, and a green sheet that was 100 mm in length, 100 mm in width and 0.4 mm in thickness was prepared using a press machine. A boron nitride slurry was applied to a single surface of the green sheet and dried, and then 10 green sheets were laminated and held in the setter for ceramic firing, thereby preparing a laminate. The laminate was placed still in a heating furnace, degreased at 600°C for five hours and then fired at a firing temperature of 1800°C for five hours, thereby obtaining a ceramic plate composed of silicon nitride.

### [Measurement and evaluation of strength (bending strength) of ceramic plate]

The strength of the ceramic plate prepared as described above was measured and evaluated with the following standards. The strength of the ceramic plate was measured using a commercially available universal tester according to JIS R 1601: 2008 "Testing method for flexural strength (modulus of rupture) of fine ceramics at room temperature." The value of the measured bending strength was evaluated with the following standards.
A: The bending strength is higher than 30 MPa.
B: The bending strength is 15 to 30 MPa.
C: The bending strength is lower than 15 MPa.

### [Evaluation of color unevenness of ceramic plate]

In order to quantitatively evaluate the color unevenness of the ceramic plate obtained as described above, the oxygen amount was measured as described below and evaluated with the following standards. A sample having dimensions of a length of 5 mm and a width of 5 mm was collected diagonally from one corner of the ceramic plate composed of silicon nitride toward the central part, each sample was ground to be powdery, and the oxygen amounts were measured using an oxygen/nitrogen analyzer in the same manner as for the setter for ceramic firing.
A: The difference between the maximum value and the minimum value of the measured oxygen amounts is 0.10 or less.
B: The difference between the maximum value and the minimum value of the measured oxygen amounts is more than 0.10 and 0.20 or less.
C: The difference between the maximum value and the minimum value of the measured oxygen amounts is more than 0.20.

**[Table 1]**

| | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|
| Forming condition | Forming pressure [MPa] | 20 | 500 | 100 | 500 | 500 | 500 | 20 | 20 | 30 | 50 |
| Firing conditions | Heating temperature of first firing [°C] | 1450 | 1400 | 1400 | 1400 | 1400 | 1800 | 1400 | 1400 | - | - |
| | Holding time of first firing [hours] | 3 | 2 | 2 | 2 | 2 | 2 | 2 | 2 | - | - |
| | Heating temperature of second firing [°C] | 2000 | 2050 | 2050 | 2050 | 20000 | 2000 | 1650 | 1550 | 2000 | 2000 |
| | Holding time of second firing [hours] | 5 | 10 | 10 | 10 | 10 | 10 | 5 | 5 | 10 | 10 |
| | Pressure during firing [MPa] | 20.0 | 0.1 | 0.1 | 0.1 | 0.1 | 0.1 | 20.0 | 20.0 | 0.1 | 0.1 |
| Setter | Porosity [%] | 10 | 23 | 34 | 38 | 31 | 34 | 8 | 24 | 45 | 43 |
| | Proportion of pores of 0.2 to 0.9 µm [%] | 77_{.}0 | 79.0 | 92.0 | 94.0 | 90.0 | 95.0 | 1.1 | 75.0 | 75.0 | 96.0 |
| | Fe content [ppm] | < 0.5 | 1.0 | < 0.5 | < 0.5 | < 0.5 | < 0.5 | 60.0 | 60.0 | <0.5 | < 0.5 |
| | Ca content [ppm] | < 0.5 | 10.0 | 3.0 | 3.0 | 3.0 | 3.0 | 4200 | 4000 | 3.0 | 3.0 |
| | Thermal expansion coefficient at 600°C [ppm/K] | -0.92 | -0.56 | -0.35 | -0.33 | -0.40 | -0.35 | -0.25 | -1.60 | -1.82 | -1.78 |
| | Peak position [µm] | 0.27 | 0.33 | 0.57 | 0.67 | 0.55 | 0.74 | 0.03 | 0.20 | 0.85 | 0.75 |
| Evaluation | Strength of ceramic | A | A | A | B | A | B | A | A | C | C |
| | Color unevenness of ceramic | B | B | A | A | A | A | C | C | B | B |

### Industrial Applicability

According to the present disclosure, it is possible to provide a setter for ceramic firing that does not impair the escape of gases during degreasing at the time of being used as a setter of ceramic firing and has excellent airtightness for maintaining the environment of ceramic during firing.

### Reference Signs List

100 Setter for ceramic firing

## Claims

1. A setter for ceramic firing,
wherein the setter is composed of a boron nitride sintered plate having a plurality of pores,
a porosity is 8 vol% or higher, which is measured according to JIS R 1655:2003, and
a proportion of pores having a pore diameter of 0.2 to 0.9 µm is 76% to 95% of all pores, the pore diameter being measured with a mercury porosimeter.

2. The setter for ceramic firing according to Claim 1,
wherein a thermal expansion coefficient at 600°C is -1.00 ppm/K or more, which is measured according to JIS R 1618:2022.

3. The setter for ceramic firing according to Claim 1 or 2,
wherein a proportion of open pores in the pores is 40% or more.

4. The setter for ceramic firing according to any one of Claims 1 to 3,
wherein a content of iron is 30.0 ppm or less.

5. The setter for ceramic firing according to any one of Claims 1 to 4,
wherein a content of calcium is 100.0 ppm or less.

6. The setter for ceramic firing according to any one of Claims 1 to 5,
wherein a peak position in a distribution curve of the pore diameters is 0.25 µm or more.

7. The setter for ceramic firing according to any one of Claims 1 to 6,
wherein a peak position in a distribution curve of the pore diameters is 0.80 µm or less.

## Patentansprüche

1. Brennhilfsmittel für Keramik,
wobei das Hilfsmittel aus einer gesinterten Bornitridplatte mit einer Vielzahl von Poren zusammengesetzt ist,
eine Porosität von 8 Vol.-% oder mehr, gemessen gemäß JIS R 1655:2003, und
der Anteil der Poren mit einem Porendurchmesser von 0,2 bis 0,9 µm beträgt 76% bis 95% aller Poren, wobei der Porendurchmesser mit einem Quecksilberporosimeter gemessen wird.

2. Brennhilfsmittel für Keramik gemäß Anspruch 1,
wobei ein thermischer Ausdehnungskoeffizient bei 600°C -1,00 ppm/K oder mehr beträgt, gemessen gemäß JIS R 1618:2022.

3. Brennhilfsmittel für Keramik gemäß Anspruch 1 oder 2, wobei ein Anteil offener Poren in den Poren 40% oder mehr beträgt.

4. Brennhilfsmittel für Keramik gemäß mindestens einem der Ansprüche 1 bis 3,
wobei ein Gehalt an Eisen 30,0 ppm oder weniger beträgt.

5. Brennhilfsmittel für Keramik gemäß mindestens einem der Ansprüche 1 bis 4,
wobei der Gehalt an Calcium 100,0 ppm oder weniger beträgt.

6. Brennhilfsmittel für Keramik gemäß mindestens einem der Ansprüche 1 bis 5,
wobei eine Peak-Position in einer Verteilungskurve der Porendurchmesser 0,25 µm oder mehr beträgt.

7. Brennhilfsmittel für Keramik gemäß mindestens einem der Ansprüche 1 bis 6,
wobei eine Peak-Position in einer Verteilungskurve der Porendurchmesser 0,80 µm oder weniger beträgt.

## Revendications

1. Moyen de réglage pour cuisson de céramique,
dans lequel le moyen de réglage est composé d'une plaque frittée en nitrure de bore présentant une pluralité de pores,
une porosité est supérieure ou égale à 8 % en volume, laquelle est mesurée selon la norme JIS R 1655:2003, et
une proportion de pores, présentant un diamètre de pores compris de 0,2 à 0,9 µm, représente 76 % à 95 % de tous les pores, le diamètre de pores étant mesuré avec un porosimètre au mercure.

2. Moyen de réglage pour cuisson de céramique selon la revendication 1, dans lequel un coefficient de dilatation thermique à 600°C est supérieur ou égal à -1,00 ppm/K, lequel est mesuré selon la norme JIS R 1618:2022.

3. Moyen de réglage pour cuisson de céramique selon la revendication 1 ou la revendication 2,
dans lequel une proportion de pores ouverts dans les pores est supérieure ou égale à 40 %.

4. Moyen de réglage pour cuisson de céramique selon l'une quelconque des revendications 1 à 3, dans lequel la teneur en fer est inférieure ou égale à 30,0 ppm.

5. Moyen de réglage pour cuisson de céramique selon l'une quelconque des revendications 1 à 4,
dans lequel la teneur en calcium est inférieure ou égale à 100,0 ppm.

6. Moyen de réglage pour cuisson de céramique selon l'une quelconque des revendications 1 à 5,
dans lequel une position de pic dans une courbe de distribution des diamètres de pores est supérieure ou égale à 0,25 µm.

7. Moyen de réglage pour cuisson de céramique selon l'une quelconque des revendications 1 à 6,
dans lequel une position de pic dans une courbe de distribution des diamètres de pores est inférieure ou égale à 0,80 µm.
